# EUROPEAN PATENT SPECIFICATION

(11) **EP 3 574 672 B1**
(45) Date of publication and mention of the grant of the patent: **17.05.2023**
(21) Application number: 17893941.9
(22) Date of filing: 14.07.2017
(51) Int. Cl.: H04W 52/02, H04W 84/12, H04W 12/06

(54) **AUTHENTICATING A MULTICAST WAKE-UP PACKET**
AUTHENTIFIZIERUNG EINES MULTICAST-AUFWECK-PAKETS
AUTHENTIFICATION D'UN PAQUET DE RÉVEIL DE MULTIDIFFUSION

(30) Priority: 26.01.2017 US 201762450766 P
(43) Date of publication of application: 04.12.2019
(73) Proprietor: Intel Corporation, Santa Clara, CA 95054 (US)
(72) Inventor: HUANG, Po-Kai, San Jose, California 95131 (US); ADRANGI, Farid, Lake Oswego, Oregon 97035 (US); PARK, Minyoung, San Ramon, California 94582 (US); STACEY, Robert J., Portland, Oregon 97210 (US)
(74) Representative: HGF
(86) International application number: PCT/US2017/042060
(87) International publication number: WO 2018/140080

(56) References cited:
- WO-A1-2014/058192
- WO-A1-2016/160306
- US-A1- 2016 057 703
- US-A1- 2016 187 954
- US-A1- 2016 374 019
- US-A1- 2016 381 638
- Dongguk Lim ET AL: "Consideration on WUR Frame Structure Date: 2017-01-15 Authors: Name Affiliation Address Phone Email", , 15 January 2017 (2017-01-15), XP055752649, Retrieved from the Internet: URL:https://mentor.ieee.org/802.11/dcn/17/ 11-17-0036-01-00ba-wur-frame-structure.ppt x [retrieved on 2020-11-20]
- YONGHO SEOK (NEWRACOM): "Traffic Filter based Wakeup Service ; 11-17-0035-00-00ba-traffic-filter-based-wa keup-service", IEEE DRAFT; 11-17-0035-00-00BA-TRAFFIC-FILTER-BASED-WA KEUP-SERVICE, IEEE-SA MENTOR, PISCATAWAY, NJ USA , vol. 802.11ba 16 January 2017 (2017-01-16), pages 1-13, XP068112428, Retrieved from the Internet: URL:https://mentor.ieee.org/802.11/dcn/17/ 11-17-0035-00-00ba-traffic-filter-based-wa keup-service.pptx [retrieved on 2017-01-16]
- MINYOUNG PARK (INTEL CORP): "Low-power wake-up receiver for 802.11 ; 11-15-1307-01-0wng-low-power-wake-up-recei ver-for-802-11", IEEE DRAFT; 11-15-1307-01-0WNG-LOW-POWER-WAKE-UP-RECEI VER-FOR-802-11, IEEE-SA MENTOR, PISCATAWAY, NJ USA, vol. 802.11 WNG, no. 1, 12 November 2015 (2015-11-12), pages 1-18, XP068099252, [retrieved on 2015-11-12]
- FRANK HSU et al.: "LP WUR Wake-up Packet Identity Considerations", IEEE 802.11-16/0402r0, 13 March 2016 (2016-03-13), pages 1-9, XP068105310, Retrieved from the Internet: URL:https://mentor.ieee.org/802.11/documen ts?is_dcn=LP%20WUR%20wake-up%20packet

## Description

### TECHNICAL FIELD

Embodiments pertain to wireless networks. Some embodiments relate to wireless local area networks (WLANs) and Wi-Fi networks including networks operating in accordance with the IEEE 802.11 family of standards, such as the IEEE 802.11ac standard or the IEEE 802.11ax study group. Some embodiments relate to a low-power wake-up receiver (LP-WUR). The invention deals with an apparatus of a station and instructions executables by processing circuitry of such station for authenticating a multicast wake-up packet.

### BACKGROUND

In recent years, applications have been developed relating to social networking, Internet of Things (IoT), wireless docking, and the like. It may be desirable to design low power solutions that can be always-on. However, constantly providing power to a wireless local area network (WLAN) radio may be expensive in terms of battery life.
WO 2016/160306 relates to ultra-low power paging frames for wake up and discovery. An apparatus is disclosed having at least one interface configured to obtain a frame via a first radio and a second radio, wherein the interface receives a frame from another apparatus via the second radio while the first radio is in a first power state, and a processing system configured to take one or more actions based on a command field included in the frame.

### SUMMARY

The scope of protection is defined according to the independent claims. Further advantageous embodiments are disclosed according to the appended dependent claims.

### BRIEF DESCRIPTION OF THE DRAWINGS

FIG. 1 is a block diagram of a radio architecture, in accordance with some embodiments.
FIG. 2 illustrates a front-end module circuitry for use in the radio architecture of FIG. 1, in accordance with some embodiments.
FIG. 3 illustrates a radio IC circuitry for use in the radio architecture of FIG. 1, in accordance with some embodiments.
FIG. 4 illustrates a baseband processing circuitry for use in the radio architecture of FIG. 1, in accordance with some embodiments.
FIG. 5 illustrates an example system in which a low-power wake-up receiver (LP-WUR) is operated, in accordance with some embodiments.
FIG. 6 illustrates an example flow chart of an example first method for authenticating a multicast wake-up packet, in accordance with some embodiments.
FIG. 7 illustrates an example flow chart of an example second method for authenticating a multicast wake-up packet, in accordance with some embodiments.
FIG. 8 illustrates an example set of wake-up packets which may be received at a station, in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

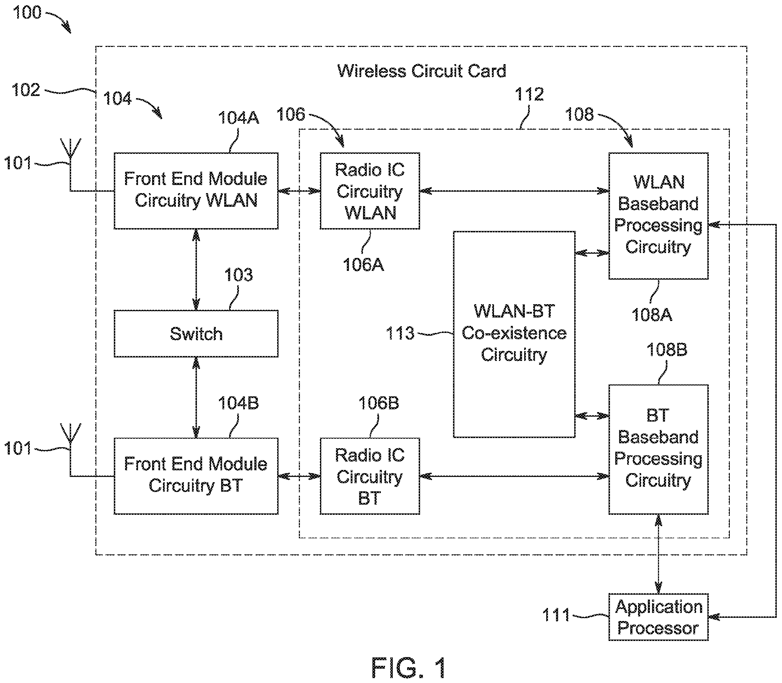

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104A may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 101, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM 104A and FEM 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry, and may further interface with application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or integrated circuit (IC), such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, the IEEE 802.11-2016 standard and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi communications in accordance with the IEEE 802.11ax standard. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and/or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards

In some embodiments, the radio-architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with noncontiguous bandwidths). In some embodiments, a 320 MHz channel bandwidth may be used. The scope of the embodiments is not limited with respect to the above center frequencies however.

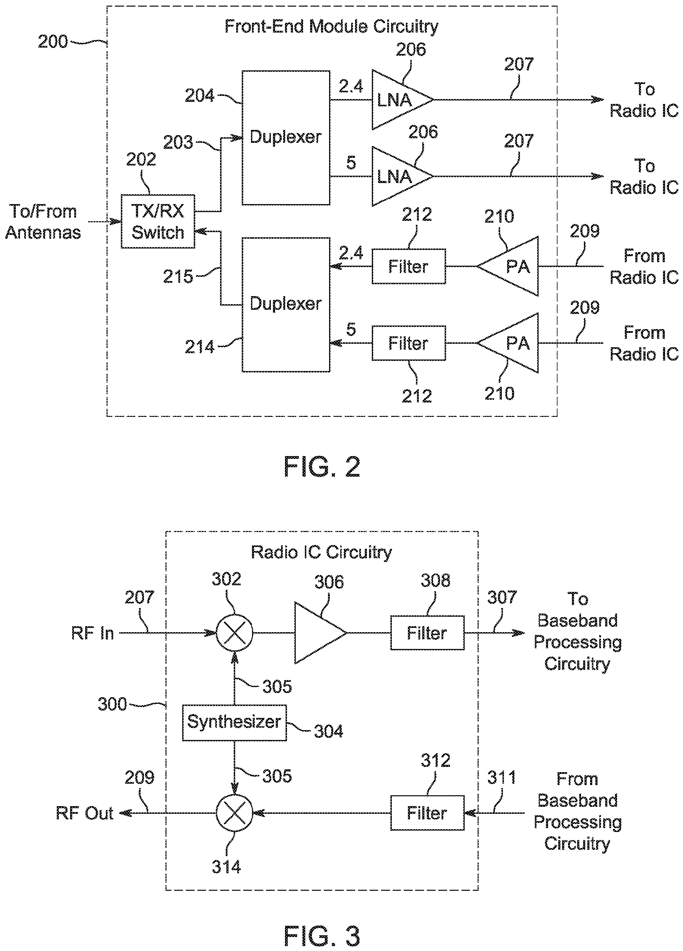

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

FIG. 3 illustrates radio IC circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. Fig. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety-degree time-varying LO switching signals provided by a quadrature circuitry which may be configured to receive a LO frequency (f_{LO}) from a local oscillator or a synthesizer, such as LO frequency 305 of synthesizer 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

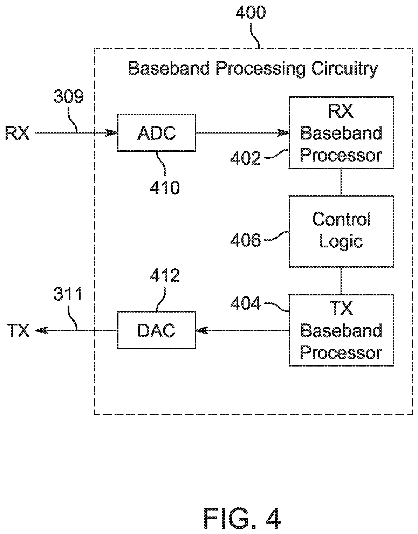

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108A,, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio-architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

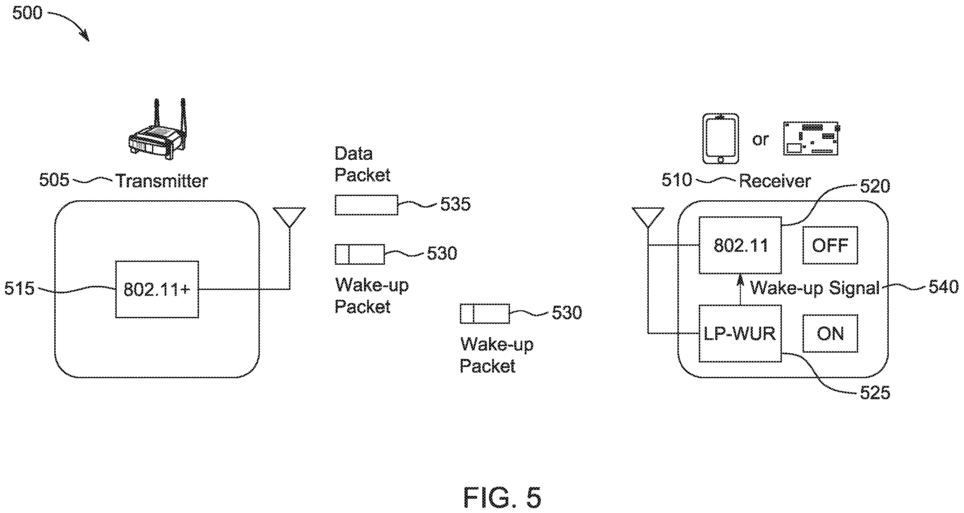

FIG. 5 illustrates an example system 500 in which a low-power wake-up receiver (LP-WUR) is operated. As shown, the system 500 includes a transmitter 505 and a receiver 510. The transmitter 505 may be a WLAN station (e.g., Wi-Fi router) and the receiver 510 may be a computing device capable of connecting to the WLAN station, such as a mobile phone, a tablet computer, a laptop computer, a desktop computer, and the like. The transmitter 505 includes an WLAN (802.11+) radio 515. The receiver 510 includes a WLAN (802.11) radio 520 (e.g., Wi-Fi radio) and a LP-WUR 525. The WLAN radio 515 of the transmitter 505 transmits one or more wake-up packets 530. One of the wake-up packets 530 is received at the LP-WUR 525 of the receiver 510. Upon receiving the wake-up packet 530, the LP-WUR 525 sends a wake-up signal 540, which causes the WLAN radio 520 of the receiver 510 to turn on. The WLAN radio 515 of the transmitter 505 transmits data packet(s) 535 to the WLAN radio 520 of the receiver 510, and the WLAN radio 520 of the receiver 510 receives the data packet(s) 535.

As illustrated in FIG. 5, LP-WUR relates to a technique to enable ultra-low power operation for a Wi-Fi device (e.g., receiver 510). The idea is for the device to have a minimum radio configuration (e.g., LP-WUR 525) that can receive a wake-up packet 530 from the peer (e.g., transmitter 505). Hence, the device can stay in low power mode until receiving the wake-up packet 530.

The receiver 510 of the wake-up packet 530 may negotiate with the transmitter 505 of wake-up packet 530 before the receiver 510 enables the LP-WUR mode. Hence, the transmitter 505 knows the agreed bandwidth and channel in which to transmit the wake-up packet, the identification in the wake-up packet, and other related information. In some cases, the transmitter 505 may also send a response frame with information to the receiver 510 before the receiver 510 enables the LP-WUR mode.

The receiver 5 10 of the wake-up packet 530 may inform the transmitter 505 of wake-up packet 530 before the receiver 510 enables the LP-WUR mode and turns off the WLAN radio 520. Hence, the transmitter 505 knows that wake-up packet 530 is allowed to transmit to the receiver 510. In some cases, the transmitter 505 may also send a response frame with information to the receiver 510 before the receiver 510 enables the LP-WUR mode.

On the other hand, the transmitter 505 may be AP that regulates the power save operation in the base station subsystem (BSS). The receiver 510 may be a senor, which has simple design and relies on AP to decide the power save mode. As a result, the AP may request the receiver 510 to enable or enable the LP-WUR mode, and the receiver 510 provides a response frame accepting the request.

In some scenarios, there may be a reply attack for a wake-up packet. Thus, wake-up packets may need to be authenticated to prevent an attacker from waking up the WLAN radio of the receiver, thereby wasting battery power of the receiver.

To deploy a large number of sensor nodes with low power consumption surfaces, it may be desirable to send multicast wake-up packet to wake up multiple STAs simultaneously and to reduce potential overhead. In these cases, authenticating multicast wake-up packet may be desirable.

The receiver 510 enters the WUR mode (with the LP-WUR 525 turned on and the WLAN radio 520 turned off) after negotiating with the transmitter 505. The transmitter 505 may be an AP. Some aspects of the subject technology are directed to an authentication mechanism for a multicast wake-up packet. Specifically, some aspects include a message authentication code field and sequence number field in the wake-up packet 530 such that the receiver 510 can authenticate that the wake-up packet 530 is from the intended transmitter 505.

In some aspects, the value of the message authentication code field is computed over the wake payload with input from the sequence number field and an agreed integrity key between the receiver 510 and the transmitter 505. Specifically, the transmitter 505 generates the integrity key and shares the integrity key with the receiver 510. The receiver 510 authenticates the message authentication code field. The receiver 510 verifies the sequence number field to make sure that the packet is not being replayed.

To differentiate between the multicast packet authentication techniques disclosed herein and unicast packet authentication techniques, one bit (or any other signaling) may be used to indicate if the wake-up packet 530 is unicast or multicast. Alternatively, the techniques disclosed herein may be applied for both unicast and multicast packets. In some aspects, a sequence number is added to the wake-up packet 530, and authentication based on the sequence number is completed at the receiver 510.

Some aspects of the subject technology prevent replay attacks. The receiver 510 might not be waken up if an attacker eavesdrops on the wake-up packet 530 and then retransmits the wake-up packet 530. According to some embodiments, the transmitter 505 and the receiver 510 negotiate the wake-up radio operation parameters through WUR request and WUR response. The receiver 510 sends WUR signaling to inform the transmitter 505 that the receiver 510 is entering into a WUR state by turning off its WLAN radio 520 and turning on its LP-WUR 525. The transmitter 505 sends a multicast wake-up packet 530 with sequence number 1 to awaken the receiver 510 and other devices implementing the WUR technology. In response, the receiver 510 exits the WUR state by turning on the WLAN radio 520 and turning off the LP-WUR 525. The receiver 510 solicits data from the transmitter 505 using power save poll (PS-Poll). The receiver 510 sends to the transmitter 505 signaling to inform the transmitter 505 that the receiver 510 is turning off the WLAN radio 520 and turning on the LP-WUR 525. The receiver 510 may solicit the latest sequence number from the transmitter 505 upon informing the transmitter that the WLAN radio 520 is being turned off and that the LP-WUR 525 is being turned on. An attacker may overhear the multicast wake-up packet with sequence number 1 and attempt to resend it to the receiver 510 at a later time. However, the receiver 510 will not be waken up because the sequence number has been increased and is now greater than 1.

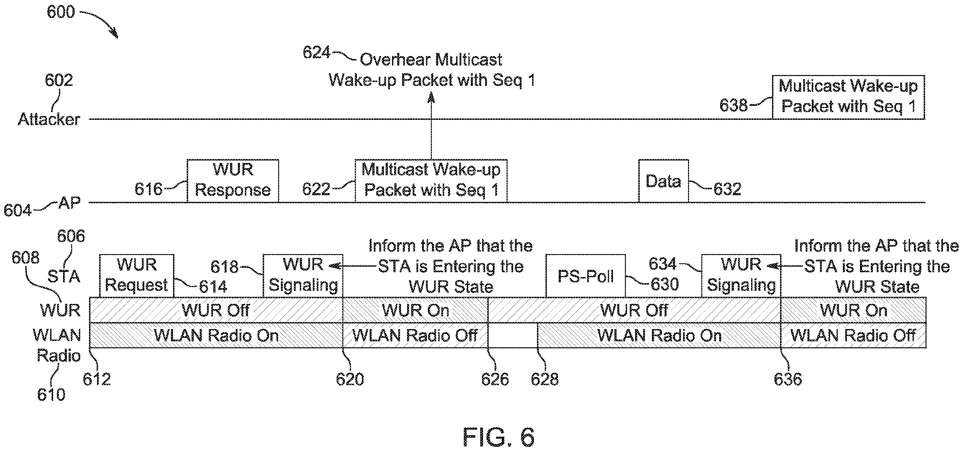

FIG. 6 illustrates an example flow chart of an example first method 600 for authenticating a multicast wake-up packet, in accordance with some embodiments. The method 600 is implemented with an attacker 602, an AP 604 (which may correspond to the transmitter 505), and a STA 606 (which may correspond to the receiver 510). The STA 606 has a WUR 608 (which may correspond to LP-WUR 525) and a WLAN radio 610 (which may correspond to the WLAN radio 520).

At time 612, the method 600 begins. The STA 606 has the WUR 608 turned off and the WLAN radio 610 turned on. The STA 606 sends a WUR request 614 to the AP 604, informing the AP 604 that the STA 606 can implement WUR technology. The AP 604 confirms that the AP 604 can implement the WUR technology with the WUR response 616. The STA 606 sends WUR signaling 618 informing the AP 604 that the STA 606 is entering the WUR state. At time 620, the STA 606 enters the WUR state with the WUR 608 turned on and the WLAN radio 610 turned off.

The AP 604 sends a multicast wake-up packet 622 with the sequence number 1. The attacker 602 overhears and stores the wake-up packet 622. The STA 606 receives the wake-up packet 622 at time 626. In response, the STA 606 turns the WUR 608 off at time 626 and turns the WLAN radio 610 on at time 628, shortly after time 626. The STA 608 sends PS-Poll 630 to the AP 604, and the AP 604 responds with data 632. The STA 606 sends the AP 604 WUR signaling 634 informing the AP 604 that the STA 606 is entering the WUR state. At time 636, the STA enters the WUR state with the WUR 608 turned on and the WLAN radio 610 turned off. The attacker 602 sends the multicast wake-up packet 638 with sequence number 1 (similar to the wake-up packet 622, which was sent by the AP 604 earlier). However, the STA 606, upon receiving the wake-up packet 638 from the attacker 602, does not turn on the WLAN radio 610 because the expected sequence number is greater than 1.

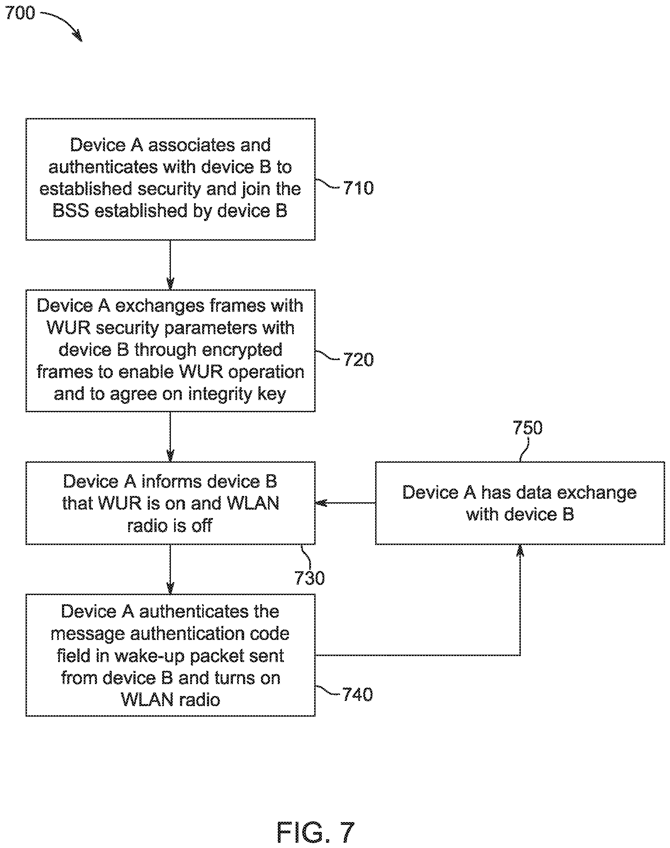

FIG. 7 illustrates an example flow chart of an example second method 700 for authenticating a multicast wake-up packet, in accordance with some embodiments. The method 700 is implemented with Device A and Device B. Device A has a WLAN radio and a LP-WUR, and may correspond to the STA 606 or the receiver 510. Device B transmits wake-up packets to wake up the WLAN radio of Device A. Device B may correspond to the AP 604 or the transmitter 505.

At operation 710, the Device A associates and authenticates with the Device B to establish security and join the BSS established by the Device B. Operation 710 may correspond to an authentication and association procedure for the Device A to join the BSS. At operation 720, the Device A exchanges frames with WUR security parameters with device B to enable WUR operation and to agree on an integrity key. The operation 720 may include a one-time procedure to enable WUR operation between the Device A and the Device B. At operation 730, the Device A informs the Device B that the WUR of the Device A is turned on and the WLAN radio of the Device A is turned off At operation 740, the Device A authenticates the message authentication code field in a wake-up packet sent from the Device B and turns on the WLAN radio (while turning off the WUR). At operation 750, the Device A has a data exchange with the Device B. After the data exchange of operation 750, the method 700 returns to the operation 730.

Aspects of the subject technology relate to authenticating a multicast wake-up packet based on a message authentication code field and a sequence number included in the multicast wake-up packet. In the message authentication code field, one subfield can represent the identification of the Device A, one subfield can represent the identification of the Device B, one subfield can represent the general wake up identification between the Device A and the Device B. Alternatively, the message authentication code field may be separate from the identification of the Device A and the Device B.

In some examples, the content of the message authentication code field can be derived from the sequence number field and the integrity key. The derivation can be based on a hashing function agreed upon by the Device A and the Device B during the WUR request/ response negotiation (e.g., in operation 720). There may be a key derivation function to generate the integrity key. For example, the key may be derived from the IEEE standard 802.11 key hierarchy (e.g., established in operation 710). The integrity key can be agreed between the Device A and the Device B through the wake-up packet request/ response negotiation. Specifically, the Device B may generate the integrity key and share it with the Device A with he wake-up packet response. The latest integrity key can be updated by the Device B. Specifically, the Device B indicates a future time point when the new integrity key is to be used. The latest integrity key may be requested by the Device A. In some cases, the message authentication code field can be derived with additional input indicating the identification of the Device B (the sender of the multicast wake-up packet). In some cases, the message authentication code field can be derived with additional input including the identification of a group of devices that includes the Device A.

For the sequence number, whenever the Device B transmits a multicast wake-up packet for a specific group, the sequence number for the specific group is increased by 1 to be used in the next multicast wake-up packet for the specific group. The starting sequence number for a specific group including the Device A can be conveyed to the Device A by the Device B through wake-up packet request/ response negotiation. In some cases, when the Device A enters the WUR mode, the next sequence number for the specific group including the Device A can be requested by the Device A from the Device B through wake-up packet request/ response negotiation. The number of bits for the sequence number field can be large to prevent quickly wrapping around a sequence number. For example, 16 bits for the sequence number field provides for 2^16 = 65,536 multicast transmissions before reaching the same sequence number which was used in the recent multicast transmission.

The Device A that receives the multicast wake-up packet with the message authentication code field and the sequence number field authenticates the message authentication code field through the agreed function and input between the Device A and the Device B (e.g., at operation 740). The Device A verifies that the sequence number is within a predefined range between the previous sequence number plus 1 and the previous sequence number plus n (where n is a predetermined number). In some cases, the predefined range may be defined with clock arithmetic based on the number of bits in the sequence number field. The value of n can be agreed between the Device A and the Device B through wake-up packet request/ response negotiation. The WLAN radio of the Device A is only waken up if the authentication and verification procedure is successful.

To make sure that the parameters exchanged between the Device A and the Device B are secure, the management frame transmitted between the Device A and the Device B to carry the parameters for the wake-up radio are encrypted through establishing IEEE standard 802.11 security between the Device A and the Device B. A protected frame subfield is set to 1 in the Media Access Control (MAC) header of the management frame. In some examples, the WUR request and response are encrypted. In some examples, the WUR signaling for indicating that the Device A is turning off its WLAN radio and turning on its WUR is encrypted.

To differentiate between the unicast and the multicast procedures, in some cases, one bit (or any other signaling) in the wake-up packet is used to indicate that the wake-up packet is multicast. Alternatively, one entry in the wake-up packet is used to indicate that the wake-up packet is multicast. For example, there could be a wake-up packet type field, and one entry of the wake-up packet type field is used to indicate that the wake-up packet is a multicast wake-up packet.

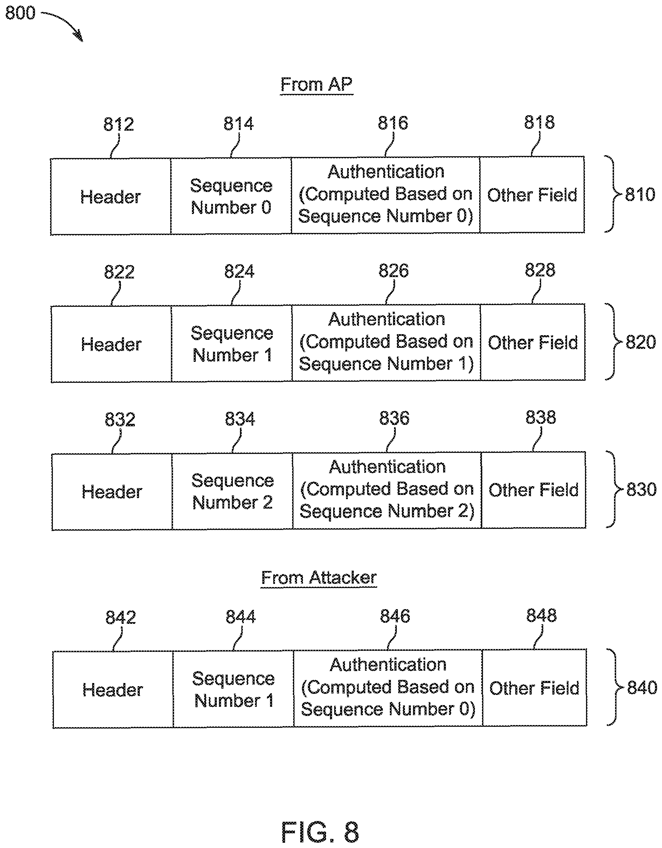

FIG. 8 illustrates an example set of wake-up packets 800 which may be received at a STA, in accordance with some embodiments. As shown, the wake-up packets 810, 820, and 830 are generated by the AP and the wake-up packet 840 is generated by an attacker.

As shown, the first wake-up packet 810, transmitted by the AP, includes a header 812, "sequence number 0" 814, an authentication field 816 computed based on the sequence number 0, and other field(s) 818. After the wake-up packet 810 is transmitted from the AP to the STA(s), the wake-up packet 810 may be overheard by an attacker.

The attacker may attempt a replay attack by re-sending the wake-up packet 810. However, this will fail because the STA(s) know to increase the sequence number to 1 (or more) after the wake-up packet 810 with sequence number 0 is received. Alternatively, the attacker may know to increase the sequence number. As a result, the attacker may transmit the wake-up packet 840, which includes the header 842, "sequence number 1" 844, a authentication field 846 computed based on the sequence number 0 (copied from the authentication field 816), and other field(s) 848. However, the attack based on the wake-up packet 840 will fail because the STA(s) receiving the wake-up packet 840 will determine that the sequence number field 844 (value 1) does not correspond to the authentication field (which is computed based on the sequence number 0).

The second wake-up packet 820, transmitted by the AP, includes a header 822, "sequence number 1" 824 (equal to the "sequence number 1" 844), an authentication field 826 computed based on the sequence number 1 (not based on sequence number 0, as the authentication field 846), and other field(s) 828. The STA(s) will wake up the WLAN radio(s) in response to the wake-up packet 820 because the authentication field 826 corresponds to the "sequence number 1" 824. The third wake-up packet 830, transmitted by the AP, similarly includes a header field 832, "sequence number 2" 834, an authentication field 836 computed based on the sequence number 2, and other field(s) 838.

## Claims

1. An apparatus of a station (606), STA, the apparatus comprising:
memory; and processing circuitry, the processing circuitry adapted to:
receive from an access point (604), AP, an integrity key; and **characterized in that** the processing circuitry is further adapted to:
decode a wake-up packet (622) received at a wake-up radio (525), WUR, of the STA (608), the wake-up packet (622) including an indication that the wake-up packet (622) is a multicast wake-up packet;
authenticate whether the wake-up packet (622) was generated by the AP (604) based on a message authentication code field (816) of the wake up packet (622), an identification of a group of devices, a sequence number, SN, of the wake-up packet (814), a latest wake-up packet SN for the group of devices, and the integrity key, wherein the STA is a member of the group of devices;
sending by the WLTR (525) a wake-up signal to the wireless local area network (520), WLAN, radio upon authentication of the wake-up packet (622); and
forego sending the wake-up signal to the WLAN radio (520) upon a failure to authenticate the wake-up packet.

2. The apparatus of claim 1, wherein the processing circuitry is further adapted to:
determine to enter a power saving state of the STA (606);
encode, for transmission to the AP (604), an indication (616) that the WLAN radio (520) of the STA (606) is being turned off and a request for the latest wake-up packet SN;
decode an indication (616) of the latest wake-up packet SN received from the AP (604);
signal, by the processing circuitry to the WLAN radio (520), for turning off the WLAN radio (520) in response to determining to enter the power saving state;
signal, by the processing circuitry to the WUR (522) of the STA (606), for turning on the WLTR in response to determining to enter the power saving state;

3. The apparatus of any of claims 1-2, wherein the multicast wake-up packet (622) is transmitted by the AP (606) for reception at a plurality of devices including the STA.

4. The apparatus of any of claims 1-2, wherein the processing circuitry is further adapted to:
store, in the memory, the latest wake-up packet SN for the group of devices, the message authentication code, and the SN of the wake-up packet.

5. The apparatus of any of claims 1-2, wherein the processing circuitry is adapted to determine whether the wake-up packet (622) came from the AP (602) based on whether the SN (814) of the wake-up packet (622) is, according to clock arithmetic with a predetermined modulus, between the latest wake-up packet SN for the group of devices and a sum of the latest wake-up packet SN and a predetermined range value.

6. The apparatus of any of claims 1-2, wherein the processing circuitry is further adapted to:
determine whether the wake-up packet (622) came from the AP (602) based on whether the message authentication code is based on the integrity key and the SN (814) of the wake-up packet.

7. The apparatus of claim 6, wherein the integrity key is based on a key derivation function in an Institute of Electrical and Electronics Engineers, IEEE, 802.11 standard key hierarchy.

8. The apparatus of any of claims 1-2, wherein the processing circuitry is further adapted to:
determine that the message authentication code identifies the group of devices.

9. The apparatus of any of claims 1-2, wherein the processing circuitry is further adapted to:
encode for soliciting data from the AP (602) using power save poll, PS-Poll, prior to signaling for turning off the WLAN radio (520).

10. The apparatus of any of claims 1-2, wherein the processing circuitry is further adapted to:
determine a public key of the AP (602);
encode for formation of a security association with the AP (602) using the public key of the AP; and
authenticate the wake-up packet (622) based on the message authentication code and the public key of the AP (602).

11. The apparatus of any of claims 1-2, further comprising:
the WUR (522) to receive the wake-up packet; and
the WLAN radio (520).

12. The apparatus of any of claims 1-2, wherein the processing circuitry comprises a baseband processor (108).

13. A machine-readable medium storing instructions for execution by processing circuitry of a station (606), STA, the instructions causing the processing circuitry to:
receive from an access point (604), AP, an integrity key; and **characterized in that** the instructions further causing the processing circuitry to:
decode a wake-up packet (622) received at a wake-up radio (522), WUR, of the STA (606), the wake-up packet (622) including an indication that the wake-up packet is a multicast wake-up packet;
authenticate whether the wake-up packet (622) was generated by the AP (604) based on a message authentication code field (816) of the wake up packet (622), an identification of a group of devices, a sequence number (814), SN, of the wake-up packet (622), a latest wake-up packet SN for the group of devices, and the integrity key, wherein the STA is a member of the group of devices;
sending by the WLTR (522) a wake-up signal to the wireless local area network (520), WLAN, radio upon authentication of the wake-up packet; and
forego sending the wake-up signal to the WLAN radio (520) upon a failure to authenticate the wake-up packet.

14. The machine-readable medium of claim 13, the instructions further causing the processing circuitry to:
determine to enter a power saving state of the STA (606);
encode, for transmission to the AP (604), an indication (616) that the WLAN radio (520) of the STA (606) is being turned off and a request for the latest wake-up packet SN;
decode an indication (616) of the latest wake-up packet SN received from the AP (604);
signal, by the processing circuitry to the WLAN radio (520), for turning off the WLAN radio (520) in response to determining to enter the power saving state;
signal, by the processing circuitry to the WUR (522) of the STA (606), for turning on the WLTR (522) in response to determining to enter the power saving state;

15. The machine-readable medium of claim 13, wherein the multicast wake-up packet (622) transmitted by the AP (604) and for reception at a plurality of devices including the STA (606).

## Patentansprüche

1. Vorrichtung einer Station (606), STA, wobei die Vorrichtung umfasst:
Speicher; und eine Verarbeitungsschaltungsanordnung, wobei die Verarbeitungsschaltungsanordnung für folgenden Vorgang eingerichtet ist:
Empfangen, von einem Zugangspunkt (604), AP, eines Integritätsschlüssels; und **dadurch gekennzeichnet, dass** die Verarbeitungsschaltungsanordnung ferner für folgende Vorgänge eingerichtet ist:
Dekodieren eines Wake-up-Pakets (622), das an einer Wake-up-Funkeinheit (525), WUR, der STA (608) empfangen wird, wobei das Wake-up-Paket (622) eine Angabe beinhaltet, dass das Wake-up-Paket (622) ein Multicast-Wake-up-Paket ist;
Authentifizieren, ob das Wake-up-Paket (622) vom AP (604) erzeugt wurde, auf der Grundlage eines Nachrichtenauthentifizierungscode-Feldes (816) des Wake-up-Pakets (622), einer Identifikation einer Gruppe von Geräten, einer Sequenznummer, SN, des Wake-up-Pakets (814), einer neuesten Wake-up-Paket-SN für die Gruppe von Geräten und des Integritätsschlüssels, wobei die STA ein Mitglied der Gruppe von Geräten ist;
Senden, durch die WUR (525), eines Wake-up-Signals an die Funkeinheit des lokalen Drahtlosnetzwerks (520), WLAN, bei Authentifizierung des Wake-up-Pakets (622); und
Verzichten auf das Senden des Wake-up-Signals an die WLAN-Funkeinheit (520), wenn die Authentifizierung des Wake-up-Pakets fehlgeschlagen ist.

2. Vorrichtung nach Anspruch 1, wobei die Verarbeitungsschaltungsanordnung ferner für folgende Vorgänge eingerichtet ist:
Bestimmen, dass die STA in einen Energiesparzustand eintreten soll (606);
Kodieren, zur Übertragung an den AP (604), einer Angabe (616), dass die WLAN-Funkeinheit (520) der STA (606) ausgeschaltet wird, und einer Anforderung nach der neuesten Wake-up-Paket-SN;
Dekodieren einer Angabe (616) der neuesten Wake-up-Pakets-SN, die vom AP (604) empfangen wurde;
Signalisieren, durch die Verarbeitungsschaltungsanordnung an die WLAN-Funkeinheit (520), die WLAN-Funkeinheit (520) auszuschalten, als Reaktion auf die Bestimmung, in den Energiesparzustand einzutreten;
Signalisieren, durch die Verarbeitungsschaltungsanordnung an die WUR (522) der STA (606), die WUR einzuschalten, als Reaktion auf die Bestimmung, in den Energiesparzustand einzutreten;

3. Vorrichtung nach einem der Ansprüche 1 bis 2, wobei das Multicast-Wake-up-Paket (622) vom AP (606) zum Empfang an einer Vielzahl von Geräten einschließlich der STA gesendet wird.

4. Vorrichtung nach einem der Ansprüche 1 bis 2, wobei die Verarbeitungsschaltungsanordnung ferner für folgenden Vorgang eingerichtet ist:
Speichern, im Speicher, der neuesten Wake-up-Paket-SN für die Gruppe von Geräten, des Nachrichtenauthentifizierungscodes und der SN des Wake-up-Pakets.

5. Vorrichtung nach einem der Ansprüche 1 bis 2, wobei die Verarbeitungsschaltungsanordnung dazu eingerichtet ist, zu bestimmen, ob das Wake-up-Paket (622) vom AP (602) kam, basierend darauf, ob die SN (814) des Wake-up-Pakets (622) gemäß einer Taktarithmetik mit einem vorbestimmten Modulus zwischen der neuesten Wake-up-Paket-SN für die Gruppe von Geräten und einer Summe der neuesten Wake-up-Paket-SN und einem vorbestimmten Bereichswert liegt.

6. Vorrichtung nach einem der Ansprüche 1 bis 2, wobei die Verarbeitungsschaltungsanordnung ferner für folgenden Vorgang eingerichtet ist:
Bestimmen, ob das Wake-up-Paket (622) vom AP (602) kam, basierend darauf, ob der Nachrichtenauthentifizierungscode auf dem Integritätsschlüssel und der SN (814) des Wake-up-Pakets basiert.

7. Vorrichtung nach Anspruch 6, wobei der Integritätsschlüssel auf einer Schlüsselableitungsfunktion in einer Schlüsselhierarchie der "Institute of Electrical and Electronics Engineers"-, IEEE-, Norm 802.11 basiert.

8. Vorrichtung nach einem der Ansprüche 1 bis 2, wobei die Verarbeitungsschaltungsanordnung ferner für folgenden Vorgang eingerichtet ist: Bestimmen, dass der Nachrichtenauthentifizierungscode die Gruppe von Geräten identifiziert.

9. Vorrichtung nach einem der Ansprüche 1 bis 2, wobei die Verarbeitungsschaltungsanordnung ferner für folgenden Vorgang eingerichtet ist:
Kodieren zum Abfragen von Daten vom AP (602) unter Verwendung von "Power Save Poll", PS-Poll, vor dem Signalisieren zum Ausschalten der WLAN-Funkeinheit (520) .

10. Vorrichtung nach einem der Ansprüche 1 bis 2, wobei die Verarbeitungsschaltungsanordnung ferner für folgende Vorgänge eingerichtet ist:
Bestimmen eines öffentlichen Schlüssels des AP (602);
Kodieren zur Bildung einer Sicherheitsbeziehung mit dem AP (602) unter Verwendung des öffentlichen Schlüssels des AP; und
Authentifizieren des Wake-up-Pakets (622) auf der Grundlage des Nachrichtenauthentifizierungscodes und des öffentlichen Schlüssels des AP (602).

11. Vorrichtung nach einem der Ansprüche 1 bis 2, ferner umfassend:
die WUR (522) zum Empfangen des Wake-up-Pakets; und
die WLAN-Funkeinheit (520).

12. Vorrichtung nach einem der Ansprüche 1 bis 2, wobei die Verarbeitungsschaltungsanordnung einen Basisbandprozessor (108) umfasst.

13. Maschinenlesbares Medium, das Anweisungen zur Ausführung durch eine Verarbeitungsschaltungsanordnung einer Station (606), STA, speichert, wobei die Anweisungen die Verarbeitungsschaltungsanordnung zu folgendem Vorgang veranlassen:
Empfangen, von einem Zugangspunkt (604), AP, eines Integritätsschlüssels; und **dadurch gekennzeichnet, dass** die Anweisungen die Verarbeitungsschaltungsanordnung ferner zu folgenden Vorgängen veranlassen:
Dekodieren eines Wake-up-Pakets (622), das an einer Wake-up-Funkeinheit (522), WUR, der STA (606) empfangen wird, wobei das Wake-up-Paket (622) eine Angabe beinhaltet, dass das Wake-up-Paket ein Multicast-Wake-up-Paket ist;
Authentifizieren, ob das Wake-up-Paket (622) vom AP (604) erzeugt wurde, auf der Grundlage eines Nachrichtenauthentifizierungscode-Feldes (816) des Wake-up-Pakets (622), einer Identifikation einer Gruppe von Geräten, einer Sequenznummer (814), SN, des Wake-up-Pakets (622), einer neuesten Wake-up-Paket-SN für die Gruppe von Geräten und des Integritätsschlüssels, wobei die STA ein Mitglied der Gruppe von Geräten ist;
Senden, durch die WUR (522), eines Wake-up-Signals an die Funkeinheit des lokalen Drahtlosnetzwerks (520), WLAN, bei Authentifizierung des Wake-up-Pakets; und
Verzichten auf das Senden des Wake-up-Signals an die WLAN-Funkeinheit (520), wenn die Authentifizierung des Wake-up-Pakets fehlgeschlagen ist.

14. Maschinenlesbares Medium nach Anspruch 13, wobei die Anweisungen die Verarbeitungsschaltungsanordnung ferner zu folgenden Vorgängen veranlassen:
Bestimmen, dass die STA in einen Energiesparzustand eintreten soll (606);
Kodieren, zur Übertragung an den AP (604), einer Angabe (616), dass die WLAN-Funkeinheit (520) der STA (606) ausgeschaltet wird, und einer Anforderung nach der neuesten Wake-up-Paket-SN;
Dekodieren einer Angabe (616) der neuesten Wake-up-Pakets-SN, die vom AP (604) empfangen wurde;
Signalisieren, durch die Verarbeitungsschaltungsanordnung an die WLAN-Funkeinheit (520), die WLAN-Funkeinheit (520) auszuschalten, als Reaktion auf die Bestimmung, in den Energiesparzustand einzutreten;
Signalisieren, durch die Verarbeitungsschaltungsanordnung an die WUR (522) der STA (606), die WUR (522) einzuschalten, als Reaktion auf die Bestimmung, in den Energiesparzustand einzutreten;

15. Maschinenlesbares Medium nach Anspruch 13, wobei das Multicast-Wake-up-Paket (622) vom AP (604) und zum Empfang an einer Vielzahl von Geräten einschließlich der STA (606) gesendet wird.

## Revendications

1. Appareil d'une station (606), STA, l'appareil comprenant :
une mémoire et un circuit de traitement, le circuit de traitement étant adapté pour :
recevoir, depuis un point d'accès, AP, (604) une clé d'intégrité ; et le circuit de traitement étant **caractérisé en ce qu'**il est en outre adapté pour :
décoder un paquet de réveil (622) reçu sur une radio de réveil (525), WUR, de la STA (608), le paquet de réveil (622) comprenant une indication que le paquet de réveil (622) est un paquet de réveil de multidiffusion ;
authentifier si le paquet de réveil (622) a été généré par l'AP (604) sur la base d'un champ de code d'authentification de message (816) du paquet de réveil (622), d'une identification d'un groupe de dispositifs, d'un numéro de séquence, SN, du paquet de réveil (814), d'un dernier SN de paquet de réveil pour le groupe de dispositifs, et de la clé d'intégrité, où la STA est un membre du groupe de dispositifs ;
envoyer, par la WUR (525), un signal de réveil à la radio de réseau local sans fil (520), WLAN, sur authentification du paquet de réveil (622) ; et renoncer à envoyer le signal de réveil à la radio WLAN (520) en cas d'échec de l'authentification du paquet de réveil.

2. Appareil selon la revendication 1, dans lequel le circuit de traitement est en outre adapté pour :
déterminer de passer dans un état d'économie d'énergie de la STA (606) ;
coder, pour transmission à l'AP (604), une indication (616) que la radio WLAN (520) de la STA (606) est mise hors tension et une demande du dernier SN de paquet de réveil ;
décoder une indication (616) du dernier SN de paquet de réveil reçu de l'AP (604) ;
signaler, par le circuit de traitement à la radio WLAN (520), la mise hors tension de la radio WLAN (520) en réponse à la détermination de passer dans l'état d'économie d'énergie ;
signaler, par le circuit de traitement, à la WUR (522) de la STA (606), de mettre sous tension la WUR en réponse à la détermination de passer dans l'état d'économie d'énergie.

3. Appareil selon l'une quelconque des revendications 1 et 2, dans lequel le paquet de réveil de multidiffusion (622) est transmis par l'AP (606) pour être reçu par une pluralité de dispositifs, y compris la STA.

4. Appareil selon l'une quelconque des revendications 1 et 2, dans lequel le circuit de traitement est en outre adapté pour :
stocker, dans la mémoire, le dernier SN de paquet de réveil pour le groupe de dispositifs, le code d'authentification de message et le SN du paquet de réveil.

5. Appareil selon l'une quelconque des revendications 1 et 2, dans lequel le circuit de traitement est adapté pour déterminer si le paquet de réveil (622) provient de l'AP (602) en fonction du fait que le SN (814) du paquet de réveil (622) est, selon une arithmétique d'horloge avec un module prédéterminé, compris entre le dernier SN de paquet de réveil pour le groupe de dispositifs et une somme du dernier SN de paquet de réveil et d'une valeur de plage prédéterminée.

6. Appareil selon l'une quelconque des revendications 1 et 2, dans lequel le circuit de traitement est en outre adapté pour :
déterminer si le paquet de réveil (622) provient de l'AP (602) en fonction du fait que le code d'authentification de message est basé, ou non, sur la clé d'intégrité et le SN (814) du paquet de réveil.

7. Appareil selon la revendication 6, dans lequel la clé d'intégrité est basée sur une fonction de dérivation de clé dans une hiérarchie de clés de la norme 802.11 de l'Institute of Electrical and Electronics Engineers, IEEE.

8. Appareil selon l'une quelconque des revendications 1 à 2, dans lequel le circuit de traitement est en outre adapté pour :
déterminer que le code d'authentification de message identifie le groupe de dispositifs.

9. Appareil selon l'une quelconque des revendications 1 à 2, dans lequel le circuit de traitement est en outre adapté pour :
coder pour solliciter des données de l'AP (602) à l'aide d'une interrogation d'économie d'énergie, PS-Poll, avant de signaler la mise hors tension de la radio WLAN (520).

10. Appareil selon l'une quelconque des revendications 1 et 2, dans lequel le circuit de traitement est en outre adapté pour :
déterminer une clé publique de l'AP (602) ;
coder pour la formation d'une association de sécurité avec l'AP (602) à l'aide de la clé publique de l'AP ; et
authentifier le paquet de réveil (622) sur la base du code d'authentification de message et de la clé publique de l'AP (602).

11. Appareil selon l'une quelconque des revendications 1 et 2, comprenant en outre :
la WUR (522) pour recevoir le paquet de réveil ; et
la radio WLAN (520).

12. Appareil selon l'une quelconque des revendications 1 et 2, dans lequel le circuit de traitement comprend un processeur de bande de base (108).

13. Support lisible par machine stockant des instructions pour l'exécution, par le circuit de traitement d'une station (606), STA, des instructions amenant le circuit de traitement à :
recevoir, depuis un point d'accès, AP, (604) une clé d'intégrité ; et le support étant **caractérisé en ce que** les instructions amènent en outre le circuit de traitement à :
décoder un paquet de réveil (622) reçu sur une radio de réveil (522), WUR, de la STA (606), le paquet de réveil (622) comprenant une indication que le paquet de réveil est un paquet de réveil de multidiffusion ;
authentifier si le paquet de réveil (622) a été généré par l'AP (604) sur la base d'un champ de code d'authentification de message (816) du paquet de réveil (622), d'une identification d'un groupe de dispositifs, d'un numéro de séquence (814), SN, du paquet de réveil (622), d'un dernier SN de paquet de réveil pour le groupe de dispositifs et de la clé d'intégrité, où la STA est un membre du groupe de dispositifs ;
envoyer, par la WUR (522), un signal de réveil à la radio de réseau local sans fil (520), WLAN, sur authentification du paquet de réveil ; et
renoncer à envoyer le signal de réveil à la radio WLAN (520) en cas d'échec de l'authentification du paquet de réveil.

14. Support lisible par machine selon la revendication 13, les instructions amenant en outre le circuit de traitement à :
déterminer de passer dans un état d'économie d'énergie de la STA (606) ;
coder, pour transmission à l'AP (604), une indication (616) que la radio WLAN (520) de la STA (606) est mise hors tension et une demande pour le dernier SN de paquet de réveil ;
décoder une indication (616) du dernier SN de paquet de réveil reçu de l'AP (604) ;
signaler, par le circuit de traitement à la radio WLAN (520), la mise hors tension de la radio WLAN (520) en réponse à la détermination de passer dans l'état d'économie d'énergie ;
signaler, par le circuit de traitement, à la WUR (522) de la STA (606), de mettre sous tension la WUR (522) en réponse à la détermination de passer dans l'état d'économie d'énergie.

15. Support lisible par machine selon la revendication 13, dans lequel le paquet de réveil de multidiffusion (622) est transmis par l'AP (604) pour être reçu par une pluralité de dispositifs, y compris la STA (606).
